# EUROPÄISCHE PATENTSCHRIFT

(11) **EP 2 611 660 B1**
(45) Veröffentlichungstag und Bekanntmachung des Hinweises auf die Patenterteilung: **11.11.2015**
(21) Anmeldenummer: 11754356.1
(22) Anmeldetag: 01.09.2011
(51) Int. Cl.: B60T 8/48, B60T 8/26

(54) **VERFAHREN ZUM BETREIBEN EINES BREMSSYSTEMS, BREMSSYSTEME WORIN DAS VERFAHREN DURCHGEFÜHRT WIRD UND KRAFTFAHRZEUG MIT EINEM DIESER BREMSYSTEME**
METHOD FOR OPERATING A BRAKE SYSTEM, BRAKE SYSTEMS IN WHICH THE METHOD IS CARRIED OUT AND MOTOR VEHICLES COMPRISING SAID BRAKE SYSTEMS
PROCÉDÉ PERMETTANT DE FAIRE FONCTIONNER UN SYSTÈME DE FREINAGE, SYSTÈMES DE FREINAGE METTANT EN UVRE LEDIT PROCÉDÉ ET VÉHICULE AUTOMOBILE MUNI D'UN DES SYSTÈMES DE FREINAGE DE CE TYPE

(30) Priorität: 03.09.2010 DE 102010040190
(43) Veröffentlichungstag der Anmeldung: 10.07.2013
(73) Patentinhaber: Continental Teves AG & Co. oHG, 60488 Frankfurt (DE)
(72) Erfinder: ULLRICH, Thorsten, 64579 Gernsheim (DE); ALBRICH VON ALBRICHSFELD, Christian, 64283 Darmstadt (DE); KARNER, Jürgen, 60486 Frankfurt (DE); FÜHRER, Jochen, 64287 Darmstadt (DE)
(74) Vertreter: Brand, Markus
(86) Internationale Anmeldenummer: PCT/EP2011/065157
(87) Internationale Veröffentlichungsnummer: WO 2012/028700

(56) Entgegenhaltungen:
- WO-A1-2004/101308
- WO-A2-2010/069659
- DE-A1- 19 604 134
- DE-A1-102006 055 766
- JP-A- 2002 255 018
- US-A- 5 326 158

## Beschreibung

Die Erfindung betrifft ein Verfahren zum Betreiben eines Bremssystems mit zwei Bremskreisen, mit einer rekuperativen Bremse, insbesondere einem elektrischen Generator, einem Hauptbremszylinder und einem Bremspedal. Sie betrifft weiterhin zugehörige Bremssysteme und ein Kraftfahrzeug.

Für den Antrieb von Kraftfahrzeugen gewinnt der Elektromotor als Ersatz bzw. als Ergänzung von Verbrennungsmotoren zunehmend Bedeutung. Dies geschieht u. a. aus Gründen der Umweltverträglichkeit und der Energieeffizienz. Der Elektromotor hat gegenüber dem Verbrennungsmotor noch weitere Vorteile, beispielsweise die volle Verfügbarkeit des Drehmomentes bei niedrigen Drehzahlen sowie die geringere Geräuschentwicklung.

Die elektrische Energie, die beim Betrieb des Kraftfahrzeugs benötigt wird, wird gewöhnlicherweise in Batterien bzw. Akkumulatoren gespeichert. Diese Akkumulatoren können beispielsweise an speziell dafür vorgesehenen Aufladestationen durch eine Verbindung mit dem Stromnetz aufgeladen werden. Nachteilig bei rein elektrisch angetriebenen Fahrzeugen ist die im Vergleich zu Kraftfahrzeugen, die mit Verbrennungsmotor betrieben werden, geringere Reichweite. Es sind daher gewöhnlich Mechanismen vorgesehen, durch die das Kraftfahrzeug auch im laufenden Betrieb mit elektrischer Energie versorgt werden kann bzw. durch die die Batterien nachgeladen werden können. Dies ist beispielsweise möglich durch die teilweise Zurückgewinnung der kinetischen Energie beim Verzögern des Fahrzeugs. Dabei wird der Elektromotor als Generator betrieben. Auf diese Weise erhöht sich die Nettofahrtzeit, die das Kraftfahrzeug rein elektrisch angetrieben werden kann. Aber auch in Systemen, beispielsweise Hybridsystemen, in denen der Elektromotor ergänzend zu einem Verbrennungsmotor agiert, ist diese Art der Energierückgewinnung sinnvoll einsetzbar.

Neben der rekuperativen Energiegewinnung und der dadurch hervorgerufenen Bremsung des Kraftfahrzeuges sind bei derartigen Fahrzeugen auch herkömmliche Betriebsbremsen vorgesehen, die zwei getrennten Bremskreisen zugeordnet sind. Diese Betriebsbremsen können beispielsweise hydraulisch, elektrohydraulisch oder elektromechanisch ausgestaltet sein. Ihr Vorhandensein ist einerseits wichtig in Fahrsituationen bzw. Betriebssituationen, in denen das vom Fahrer gewünschte Sollbremsmoment das aktuell vom Generator verfügbare Bremsmoment überschreitet. Andererseits muss auch bei Ausfall des Generators bzw. in Situationen, in denen der Generator kein nennenswertes Bremsmoment liefern kann, eine sichere und rechtzeitige Abbremsung des Kraftfahrzeuges gewährleistet sein.

Regenerative Bremssysteme zur rekuperativen Rückgewinnung von Energie können in unterschiedlicher Weise technisch realisiert werden. Beispielsweise kann ein derartiges Bremssystem als elektrohydraulisches Bremssystem mit zwei Bremskreisen und jeweils zugeordneten hydraulischen Betriebsbremsen ausgestaltet sein, wobei das Bremspedal mit einer Betätigungseinheit verbunden ist und wobei eine hydraulische Steuer- und Regeleinheit vorgesehen ist, die bei einem Bremswunsch des Fahrers Bremsflüssigkeit in die Betriebsbremsen leitet.

Moderne Bremsanlagen enthalten noch erweiterte Funktionalitäten wie beispielsweise ein Antiblockiersystem (ABS) und/oder ein elektronisches Stabilitätsprogramm (ESP), durch welche in den einzelnen Bremsen gezielt Druck auf- und abgebaut werden kann, wodurch das Fahrzeug beim Bremsen oder bei Schleudergefahr stabilisiert werden kann.

Zur Realisierung derartiger Funktionalitäten umfasst das Bremssystem gewöhnlich wenigstens einen Volumenspeicher für Bremsflüssigkeit, der normalerweise als Niederdruckspeicher ausgebildet ist. Weiterhin sind Ventile vorgesehen, mit deren Hilfe Bremsflüssigkeit gezielt aus den Bremsen in den entsprechenden Niederdruckspeicher abgeleitet werden kann, wodurch der Bremsdruck reduziert wird. Zur aktiven Rückförderung dieses Bremsflüssigkeitsvolumens werden gewöhnlich hydraulische Pumpen eingesetzt.

Um bei einem derartigen Bremssystem das maximal verfügbare Generatorbremsmoment und damit auch den maximal möglichen Energiegewinn auszunutzen, muss die Betätigung des Bremspedals von dem direkten Durchgriff auf die Radbremsen entkoppelt werden. Dies betrifft Fahrzeuge mit ganz oder teilweise elektrischem Antrieb, der für die Energiegewinnung durch regeneratives Bremsen ausgelegt ist. Hierzu sind bereits konstruktive Lösungen bekannt, deren Nachteil aber darin liegt, dass ein mechanischer Leerweg in der Übertragung zwischen Bremspedal und Radbremsen vorgesehen wird, der nicht an die aktuelle Generatorbremswirkung angepasst werden kann und insbesondere im Fall eines Fehlers der Bremsanlage als Fehlvolumen zu berücksichtigen ist. Dies führt u. a. dazu, dass sich je nach Situation, d. h. je nach Fahrzeuggeschwindigkeit, Sollbremsmoment und aktuell verfügbarem Generatorbremsmoment, für den Fahrer des Fahrzeuges ein unterschiedlicher Pedalweg bei gewünschtem Bremsmoment einstellt. Der Fahrer kann dadurch verunsichert werden, weil je nach Fahrsituation die gleiche Betätigung des Bremspedals zu einem unterschiedlichen Bremsverhalten des Fahrzeuges führt.

Aus der WO 2004/101308 A1 ist ein Verfahren für ein Bremssystem eines Kraftfahrzeugs bekannt, welches eine elektrische-regenerative Bremse, insbesondere einen Generator und eine Anzahl von einem Bremsdruckerzeugungsmittel über ein Bremsmittel angetriebene hydraulische Reibbremsen aufweist, dessen Gesamtverzögerung sich aus Verzögerungsanteilen der Reibbremsen und der elektrisch-regenerativen Bremse zusammensetzt, wobei beim Bremsen mit einer elektrisch-regenerativen Bremse Bremsmittel in einem Druckspeicher abgeleitet wird. In der JP 2002-255018 A ist ein Bremssystem offenbart, welches durch die Aufnahme von Bremsmittel in einen speziellen Druckspeicher während einer Bremsung ein gleichbleibendes Pedalgefühl bereitstellt.

Der Erfindung liegt die Aufgabe zu Grunde, ein Verfahren zum Betreiben eines Bremssystems bereitzustellen, bei dem gleichzeitig eine optimierte Ausnutzung des regenerativen Bremsens und ein gleich bleibendes Bremserlebnis des Fahrers bei höchsten Sicherheitsanforderungen realisiert sind. Weiterhin sollen ein zugehöriges Bremssystem und ein zugehöriges Kraftfahrzeug angegeben werden.

In Bezug auf das Verfahren wird die Aufgabe erfindungsgemäß dadurch gelöst, dass bei einem Bremswunsch des Fahrers mit einem zugehörigen Sollbremsmoment bei Vorliegen einer ersten Bedingung wenigstens ein Auslassventil geöffnet wird und Bremsflüssigkeit mit einem zugeordneten Bremsflüssigkeitsvolumen in wenigstens einen Speicher geleitet wird und anschließend das wenigstens eine Auslassventil bei Vorliegen einer zweiten Bedingung geschlossen wird, wobei die erste Bedingung vorliegt, wenn eine zum Bremswunsch korrespondierende Bremsgröße einen vorgegebenen Minimalwert nicht unterschreitet, und wobei die zweite Bedingung vorliegt, wenn das Bremsflüssigkeitsvolumen in den Speicher geflossen ist.

Vorteilhafte Ausgestaltungen der Erfindung sind Gegenstand der Unteransprüche.

Die Erfindung geht von der Überlegung aus, dass für eine optimale Ausnutzung des regenerativen Bremsens, d. h. des Bremsens durch den als Generator betriebenen Elektromotor, das Bremspedal von dem direkten Zugriff auf die Betriebsbremsen entkoppelt werden muss. Nur auf diese Weise kann das maximal verfügbare Generatorbremsmoment genutzt werden. Geschieht eine solche Entkopplung nicht, d. h., wird parallel zum Generator auch mit den Betriebsbremsen gebremst, kann das verfügbare Generatorbremsmoment nicht in maximal möglicher Weise ausgenutzt werden.

Bei herkömmlichen, hydraulischen Bremssystemen, bei denen der Fahrer durch Betätigung des Bremspedals aktiv Bremsflüssigkeit in die Bremsen leitet, besteht ein im Wesentlichen fester bzw. konstanter Zusammenhang zwischen der Pedalauslenkung und der entsprechenden Verzögerung des Kraftfahrzeuges. Durch diesen konstanten Zusammenhang - der in diesem Fall durch die Konstruktionsweise des Bremssystems gegeben ist - kann der Fahrer aufgrund früherer Erfahrungswerte durch eine Betätigung des Bremspedals gezielt die gewünschte Verzögerung herbeiführen.

Wenn im Fall des regenerativen Bremsens das Bremspedal von der Betätigung der Betriebsbremsen entkoppelt wird und der Elektromotor zur Bremsung eingesetzt wird, d. h., keine Flüssigkeit durch Betätigung des Bremspedals in die Radbremsen transportiert wird, ergibt sich ohne entsprechende Maßnahmen für den Fahrer kein konstanter Zusammenhang zwischen Bremspedalauslenkung und Fahrzeugverzögerung, insbesondere auch dann, wenn keine dynamische Berücksichtigung des momentan verfügbaren Generatorbremsmomentes erfolgt. Ist das aktuell vom Generator verfügbare Bremsmoment ausgeschöpft, muss dem Fahrer die Möglichkeit gegeben werden, durch eine weitere Betätigung des Bremspedals z. B. hydraulisch das Fahrzeug weiter abzubremsen. Bei unterschiedlich großem verfügbarem Generatorbremsmoment ist bei einer Konstruktion ohne dynamische Anpassung an das verfügbare Generatorbremsmoment auch der Pedalweg, der zurückgelegt wird, bevor die Bremsen hydraulisch betätigt werden, unterschiedlich groß. Der Fahrer kann dadurch verunsichert werden über die Wirksamkeit des Bremspedals bzw. kann schwer einschätzen, wie er in einer gewissen Fahrsituation das Bremspedal betätigen muss bzw. auslenken muss, um das gewünschte Bremsmoment zu erzeugen.

Wie nunmehr erkannt wurde, lassen sich ein weitgehend konstanter Zusammenhang zwischen Pedalauslenkung und nominaler Fahrzeugverzögerung während des gesamten Bremsvorganges bei gleichzeitiger maximaler Ausnutzung des aktuell verfügbaren Generatorbremsmomentes dadurch realisieren, dass auch bei einer rein rekuperativen Bremssituation Bremsflüssigkeit bei der Betätigung des Bremspedals verschoben wird. Damit die Bremswirkung des Generators voll ausgenutzt werden kann, darf diese Bremsflüssigkeit aber nicht unmittelbar in die Bremsen geleitet werden. Dies kann dadurch umgangen werden, dass die Bremsflüssigkeit in einen Speicher geleitet wird, wobei das in den Speicher eingeleitete Bremsflüssigkeitsvolumen in geeigneter Weise dimensioniert wird. Der Beginn des Einleitens und das Ende des Einleitens der Bremsflüssigkeit in den Speicher können dabei durch das Öffnen bzw. Schließen wenigstens eines Auslassventils geschehen.

Dieser Vorgang sollte aber nicht automatisch bei jedem Bremsvorgang geschehen, sondern sollte an gewisse Bedingungen geknüpft werden, die beispielsweise von dem Sollbremsmoment, dem aktuellen Zustand des Bremssystems, und der Art der Bremsung abhängen können. Die Bremsflüssigkeit sollte beispielsweise unter gewissen Umständen nicht in den Speicher, sondern (auch) in die Bremsen geleitet werden, wenn das aktuell vom Generator verfügbare Bremsmoment nicht ausreichend groß ist. Dies kann durch eine Bedingung realisiert werden, die erfüllt ist, wenn eine zum Bremswunsch korrespondierende Bremsgröße einen vorgegebenen Minimalwert nicht unterschreitet.

Der Zeitpunkt, zu dem das wenigstens eine Auslassventil wieder geschlossen wird, wodurch das Füllen des Speichers mit Bremsflüssigkeit beendet wird, sollte auch von verschiedenen Bedingungen abhängen. Dieser Vorgang sollte in jedem Fall beendet werden, wenn das gewünschte Bremsflüssigkeitsvolumen vollständig in den Speicher geflossen ist.

Vorteilhafterweise liegt die erste Bedingung nur dann vor, wenn die zeitliche Änderung der Bremsgröße einen vorgegebenen Maximalwert nicht überschreitet. Das Verschieben des Bremsflüssigkeitsvolumens in den Speicher sollte in diesem Fall gar nicht durchgeführt werden. Dies ist z. B. der Fall, wenn eine Panikbremsung erfolgt, d. h., das Fahrzeug möglichst schnell zum Stehen gebracht werden soll. In diesem Falle ist es vorteilhaft, unmittelbar die Betriebsbremsen zum Abbremsen des Kraftfahrzeuges einzusetzen um eine maximale Verzögerung des Kraftfahrzeuges zu erreichen.

In einer bevorzugten Ausführungsform des Verfahrens liegt die erste Bedingung zusätzlich nur dann vor bzw. ist nur dann erfüllt, wenn das durch den Generator verfügbare Bremsmoment größer als ein vorgegebenes minimales Generatorbremsmoment ist. Das heißt, bei nur sehr kleinem Generatorbremsmoment kann der Fahrer durch die Betätigung des Bremspedals unmittelbar die Betriebsbremsen betätigen. Dadurch kann der Umleitvorgang der Bremsflüssigkeit in den Speicher ausgelassen werden, da bei einem gewünschten Bremssollmoment, das deutlich höher ist als das geringe vom Generator lieferbare Bremsmoment, in jedem Fall die Betriebsbremsen eingesetzt werden müssten.

Wenn das Sollbremsmoment das zu Beginn der Bremsung verfügbare Generatorbremsmoment übersteigt, werden vorteilhafterweise die Betriebsbremsen betätigt und das Bremsflüssigkeitsvolumen wird derart bemessen, dass bei der aktuellen Auslenkung des Bremspedals die Summe aus dem Generatorbremsmoment und dem durch die Betriebsbremsen erzeugten Bremsmoment dem Bremsmoment eines konventionellen hydraulischen Bremssystems bei gleicher Pedalauslenkung entspricht.

Der Kraftfahrzeugfahrer erfährt bei einer derartigen Bremsung genau den gleichen bzw. im Wesentlichen den gleichen Zusammenhang zwischen Pedalauslenkung und Bremsmoment bzw. Fahrzeugverzögerung, wie bei einer gewöhnlichen, hydraulischen Bremsung. Die Auswirkungen einer gewissen Pedalauslenkung sind also trotz regenerativer Bremsfunktion nicht anders als bei einer konventionellen Bremsung. Der Fahrer muss sich somit nicht an andere Verhaltensweisen des Bremspedals hinsichtlich des zugehörigen Bremsmomentes gewöhnen.

Vorzugsweise wird, wenn das Sollbremsmoment unter dem aktuell verfügbaren Generatorbremsmoment liegt, zur Berechnung des Bremsflüssigkeitsvolumens der zu erwartende Anstieg des Generatorbremsmomentes während des Verlaufs der Bremsung berücksichtigt. Dies ist deshalb wichtig, da das verfügbare Generatorbremsmoment geschwindigkeitsabhängig ist, d. h., es hängt von der Geschwindigkeit des Kraftfahrzeuges ab. Während der Abbremsphase eines Kraftfahrzeuges kann der Generator in gewissen Situationen mehr Bremsmoment liefern als zu Beginn des Bremsvorganges. Dieser zusätzliche Beitrag wird nun bei der Berechnung des Bremsflüssigkeitsvolumens berücksichtigt. Auf diese Weise kann auf sehr akkurate Art und Weise ein Zusammenhang zwischen Pedalweg und Verzögerung hergestellt werden, der einer äquivalenten hydraulischen Bremsung mit dem vorliegenden Bremsmoment weitgehend entspricht.

In Bremssituationen, in denen das Sollbremsmoment, das von dem Fahrer durch Betätigung des Bremspedals gewünscht wird, über das aktuell vom Generator verfügbare Bremsmoment hinausgeht, werden vorteilhafterweise die Betriebsbremsen betätigt. Das Bremsmoment, das in diesem Fall von den Betriebsbremsen geliefert wird, entspricht also optimalerweise der Differenz zwischen Sollbremsmoment und dem von dem aktuell vom Generator lieferbaren Bremsmoment. Auf diese Weise wird das rekuperative Bremsen vollständig genutzt, während die Betätigung der Betriebsbremsen sicherstellt, dass das gewünschte Sollbremsmoment realisiert wird.

Nach einem Bremsvorgang muss die in den Speicher geleitete Bremsflüssigkeit wieder in das Bremssystem zurückgeführt werden, so dass der Speicher für nachfolgende regenerative Bremsungen sowie für ABS Regelbremsungen wieder mit voller Kapazität zur Verfügung steht. Erfindungsgemäß wird daher nach dem Bremsvorgang wenigstens ein elektrisches Umschaltventil angesteuert und die Bremsflüssigkeit aus dem wenigstens einen Speicher zurück in wenigstens einen Bremskreis geleitet. Die Ansteuerzeit des wenigstens einen elektrischen Umschaltventils wird dabei vorteilhafterweise in Abhängigkeit von der Temperatur und des im Speicher gespeicherten Bremsflüssigkeitsvolumens gewählt.

Alternativ oder in Kombination dazu können zu einem geeignet zu wählenden Zeitpunkt Trennventile geschlossen werden und eine Hydraulikpumpe angesteuert werden, wodurch die Bremsflüssigkeit aus dem Speicher in die Radbremsen geleitet wird. Gleichzeitig kann das Generatorbremsmoment reduziert werden. Auf diese Weise kann ein so genanntes "Blending" zwischen dem durch den Generator erzeugten Bremsmoment und dem von den Betriebsbremsen erzeugten Bremsmoment erreicht werden, so dass bei gleichbleibender Pedalauslenkung ein konstantes Bremsmoment realisiert wird, wobei der jeweilige Anteil von Generator und Betriebsbremsen zeitlich variiert. Dies ist beispielsweise bei einem Bremsvorgang bis zum Stillstand des Fahrzeuges vorteilhaft.

Aufgrund der sinkenden Geschwindigkeit des Fahrzeuges sinkt auch das verfügbare Generatorbremsmoment. Damit bei gleichbleibender Pedalauslenkung dennoch das gleiche Bremsmoment bis zum Stillstand aufrechterhalten werden kann, wird in diesem Fall das von den Betriebsbremsen erzeugte Bremsmoment in dem Maße erhöht, wie das von dem Generator erzeugte Bremsmoment abnimmt. Der Fahrer spürt auf diese Weise nicht das Nachlassen des Generatorbremsmomentes. Ohne die oben beschriebenen Maßnahmen müsste der Fahrer bei nachlassendem Generatorbremsmoment das Bremspedal stärker auslenken, um das nachlassende Bremsmoment zu kompensieren.

In einer bevorzugten Variante des Verfahrens ist die Bremsgröße der Verfahrweg des Kolbens im Hauptbremszylinder oder der Pedalweg des Bremspedals. Sowohl der Verfahrweg als auch der Pedalweg eignen sich als Maß für den Fahrerbremswunsch bzw. für das vom Fahrer geforderte Sollbremsmoment.

Das oben beschriebene Verfahren wird in einer bevorzugten Ausführungsform zum Betreiben eines elektrohydraulischen Bremssystems eingesetzt, wobei die Betätigung der Bremsen hydraulisch durch Betätigung des Bremspedals und/oder durch die Ansteuerung wenigstens einer Hydraulikpumpe erfolgt.

In einer alternativen, bevorzugten Ausführungsform des Verfahrens wird das Verfahren zum Betreiben eines Brake-by-Wire-Bremssystems eingesetzt, wobei die Bremsen aktiv durch einen Bremskraftverstärker betätigt werden. In einer weiteren bevorzugten Ausführungsform wird das Verfahren zum Betreiben eines kombinierten Bremssystems mit elektromechanischen und hydraulischen Bremsen eingesetzt.

In Bezug auf das Bremssystem wird die oben genannte Aufgabe erfindungsgemäß gelöst durch ein elektrohydraulisches Bremssystem, das eine elektronische Steuer- und Regeleinheit umfasst, in der das oben genannte Verfahren ausgeführt wird, wobei als Speicher ein Niederdruckspeicher verwendet wird, sowie durch ein Brake-by-Wire-Bremssystem, das eine elektronische Steuer- und Regeleinheit umfasst, in der ein oben genanntes Verfahren ausgeführt wird, wobei als Speicher ein Niederdruckspeicher eingesetzt wird. Sie wird ebenfalls gelöst durch ein kombiniertes Bremssystem für ein Kraftfahrzeug, wobei ein erster Bremskreis zwei elektromechanisch betätigbare Bremsen umfasst und vorzugsweise der Hinterradachse zugeordnet ist und wobei ein zweiter Bremskreis zwei hydraulische Bremsen und einen Niederdruckspeicher umfasst und vorzugsweise der Vorderradachse zugeordnet ist, und wobei eine elektronische Steuer- und Regeleinheit vorgesehen ist, in der ein oben genanntes Verfahren ausgeführt wird.

Bei allen drei Arten von Bremssystemen werden bevorzugt zur Durchführung des Verfahrens dieselben Niederdruckspeicher eingesetzt, die für eine ABS- oder ESP-Funktionalität eingesetzt werden. Es müssen in diesem Fall keine zusätzlichen Speicher verbaut werden.

In Bezug auf das Kraftfahrzeug wird die oben genannte Aufgabe erfindungsgemäß gelöst mit einem der genannten Bremssysteme. Ein derartiges Kraftfahrzeug bietet dem Fahrer einerseits optimierten Komfort beim Bremsen, da er von dem Zusammenspiel der rekuperativen Bremse und der Betriebsbremsen während des Bremsvorganges nichts bemerkt, so dass er stets einen im Wesentlichen konstanten Zusammenhang zwischen Pedalweg bzw. Pedalauslenkung und Abbremsverhalten des Fahrzeuges erfährt. Andererseits wird das regenerativ erzeugte Bremsmoment in optimierter Weise zur Energierückgewinnung genutzt, so dass das Kraftfahrzeug besonders energiesparend und umweltfreundlich betrieben werden kann.

Die Vorteile der Erfindung liegen insbesondere darin, dass durch die Leitung eines Bremsflüssigkeitsvolumens in einen Speicher während eines rekuperativen Bremsvorganges sowie die Knüpfung dieses Vorganges an Bedingungen, dass eine zu dem Bremswunsch korrespondierende Größe einen Minimalwert nicht unterschreitet, sowie dass diese Bremsgröße nicht einer plötzlichen Änderung unterworfen wird, der Fahrer während des rekuperativen Bremsvorgangs einerseits einen gewohnten bzw. gleichbleibenden Zusammenhang zwischen Pedalweg und Verzögerung erfährt, andererseits das rekuperative Bremsen nur in Situationen eingesetzt wird, in denen es aus systemökonomischen und sicherheitsrelevanten Aspekten sinnvoll ist.

Durch das so genannte "Blending", d. h. die Rückförderung des in den Speicher eingeleiteten Volumens in die Radbremsen, kann eine gleichbleibende Bremswirkung auch bei einem Wegfall des vom Generator bereitgestellten Bremsmomentes, z. B. kurz vor Erreichen des Stillstandes, gewährleistet werden.

Ein Ausführungsbeispiel der Erfindung wird anhand einer Zeichnung näher erläutert. Darin zeigen in stark schematisierter Ansicht:
- FIG. 1: ein Zustandsdiagramm eines Verfahrens zum Betreiben eines Bremssystems in einer ersten bevorzugten Ausführungsform für ein elektrohydraulisches Bremssystem,
- FIG. 2: eine dem Verfahren nach FIG. 1 zu Grunde liegende Systemarchitektur eines elektrohydraulischen Bremssystems,
- FIG. 3: eine graphische Darstellung des Zusammenhangs zwischen dem verfügbaren Generatorbremsmoment und der Fahrzeuggeschwindigkeit,
- FIG. 4: eine graphische Darstellung des Verhältnisses zwischen der dynamischen und der statischen Dimensionierung einer elektrohydraulischen Lücke in Abhängigkeit von dem zu Beginn der Bremsung verfügbarem Generatorbremsmoment,
- FIG. 5: ein Zustandsdiagramm eines Verfahrens zum Betreiben eines Bremssystems in einer zweiten bevorzugten Ausführungsform für ein Brake-by-Wire-Bremssystem,
- FIG. 6: eine dem Verfahren aus FIG. 5 zu Grunde liegende Systemarchitektur eines Brake-by-Wire-Bremssystems,
- FIG. 7: eine Vorrichtung zur Entkopplung von Pedalweg und Verfahrweg eines Hauptbremszylinders zur Verwendung in der Systemarchitektur aus FIG. 6, und
- FIG. 8: ein elektrohydraulisches Bremssystem mit einem Generator und einer elektronischen Steuer- und Regeleinheit zur Durchführung des in FIG. 1 dargestellten Verfahrens.

Gleiche Teile sind in allen Figuren mit den gleichen Bezugszeichen versehen.

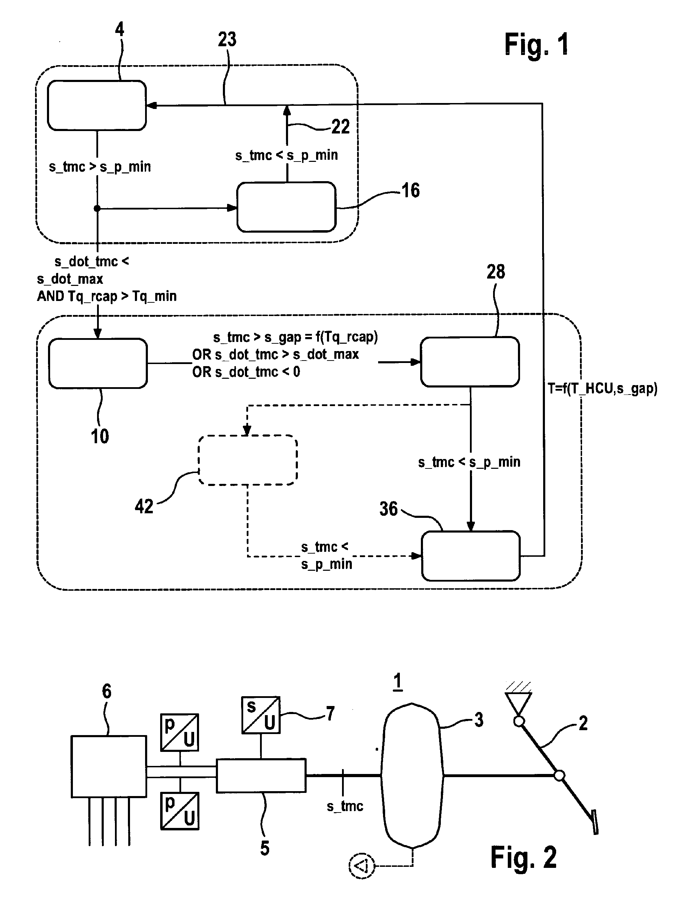

Ein Verfahren zum Betreiben eines Bremssystems in einer ersten bevorzugten Ausführungsform für ein elektrohydraulisches Bremssystem wird im Folgenden anhand des in FIG. 1 dargestellten Zustandsdiagramms erläutert. Eine zugehörige Realisierung eines konventionellen, hydraulischen Bremssystems 1 nach dem Stand der Technik mit einem Bremspedal 2, einem Booster 3, einem Hauptbremszylinder 5 und einer rekuperativen Bremsanlage 6 ist in FIG. 2 dargestellt. Die rekuperative Bremsanlage 6 umfasst vorteilhafterweise hydraulische und elektronische Komponenten zur Durchführung eines ESC (Electronic Stability Control) Programms. Zur Bestimmung des Verfahrweges des Hauptzylinders 5 ist ein Wegsensor 7 vorgesehen.

Die Funktionalität bzw. der Verfahrensschritt, den bei einer regenerativen Bremsung erforderlichen Leerweg des Bremspedals hydraulisch durch Verschiebung eines Bremsflüssigkeitsvolumens in einen Speicher zu realisieren, wird im Folgenden als elektrohydraulische Lücke bzw. eGap bezeichnet. Diese Bezeichnung wird gleichermaßen auch für das auf diese Weise verschobene Bremsvolumen verwendet.

Ausgehend vom Zustand Bereit (Ready) 4, in dem die Ventile der ESC Anlage bzw. des Bremssystems 1 im stromlosen Zustand sind, erfolgt ein Übergang in den Zustand Offen (Open) 10, sobald der Verfahrweg s_tmc des Hauptbremszylinders 5, welcher als Bremsgröße fungiert, einen Mindestweg s_p_min überschreitet und zusätzlich die Änderungsgeschwindigkeit des Verfahrweges des Hauptbremszylinder s_dot_tmc unter einer maximalen Schwelle von s_dot_max liegt und weiterhin ein Generatorbremsmoment Tq_rcap von mindestens Tq_min (minimales Generatorbremsmoment) zur Verfügung steht.

Durch die beiden Zusatzbedingungen (maximale Änderungsgeschwindigkeit des Verfahrweges s_tmc und minimal verfügbares Generatorbremsmoment Tq_rcap > Tq_min) wird erreicht, dass keine Aktivierung der elektrohydraulischen Lücke stattfindet, wenn eine Panikbremsung (charakterisiert durch eine hohe Antrittsgeschwindigkeit des Bremspedals) vorliegt, sowie dann nicht, wenn nur eine geringe Generatorbremswirkung verfügbar ist. Ist eine der Zusatzbedingungen beim Überschreiten der Wegschwelle s_p_min nicht erfüllt, findet der Übergang in den Zustand Eingestellt (Suspended) 16 statt. Dieser Zustand Eingestellt 16 wird erst beim Lösen des Bremspedals, d. h. beim Unterschreiten der Wegschwelle s_p_min des Verfahrweges s_tmc des Hauptbremszylinders 5, über den Pfeil 22 verlassen. Das Bremssystem wird daraufhin über den Pfeil 23 für die nächste Bremsung in Bereitschaft geschaltet (Übergang in den Ausgangszustand Bereit 4).

Im Zustand Offen 10 findet eine Ansteuerung von stromlos offenen Auslassventilen (AV) statt, so dass das durch das Vorfahren des Hauptbremszylinders verschobene Bremsflüssigkeitsvolumen nicht in die Radbremsen sondern in den Speicher, der im vorliegenden Ausführungsbeispiel als Niederdruckspeicher (NDS) ausgestaltet ist, gelangt. Je nach der Höhe der Ansprechdrücke von NDS und Radbremsen erfolgt allerdings bereits ein Abbau des Lüftspiels an den Radbremsen.

Zur Reduzierung der Schaltspiele der AV ist es möglich, in jeder Bremsung wechselweise nur ein AV in jedem der beiden Bremskreise anzusteuern.

Die AV werden geschlossen und der Zustand Geschlossen (Closed) 28 wird erreicht, wenn der Verfahrweg des Hauptbremszylinders eine Schwelle s_gap erreicht. Die Schwelle s_gap wird zu Beginn der Bremsung adaptiv anhand des zu diesem Zeitpunkt verfügbaren Generatorbremsmomentes bestimmt, dies wird weiter unten genauer im Rahmen der Dimensionierung der elektrohydraulischen Lücke beschrieben.

Die AV werden bereits vor Erreichen der Wegschwelle s_gap geschlossen, wenn eine schnelle Vorwärtsbewegung des Pedals erkannt wird (Panikbremsung) oder eine Rückwärtsbewegung vorliegt. Im letzten Fall ist das Schließen der Ventile notwendig, um deren Rückwärtsdurchströmung zu vermeiden.

Zusätzlich kann aus Sicherheitsgründen eine zeitliche Begrenzung der AV-Ansteuerung implementiert werden. Weiterhin lässt sich die AV-Ansteuerung auf den Fall der Vorwärtsbewegung des Bremspedals begrenzen.

Der Zustand Geschlossen 28 wird verlassen, wenn das Bremspedal gelöst wird, d. h. der Verfahrweg s_tmc des Hauptbremszylinders die Wegschwelle s_p_min wieder unterschreitet.

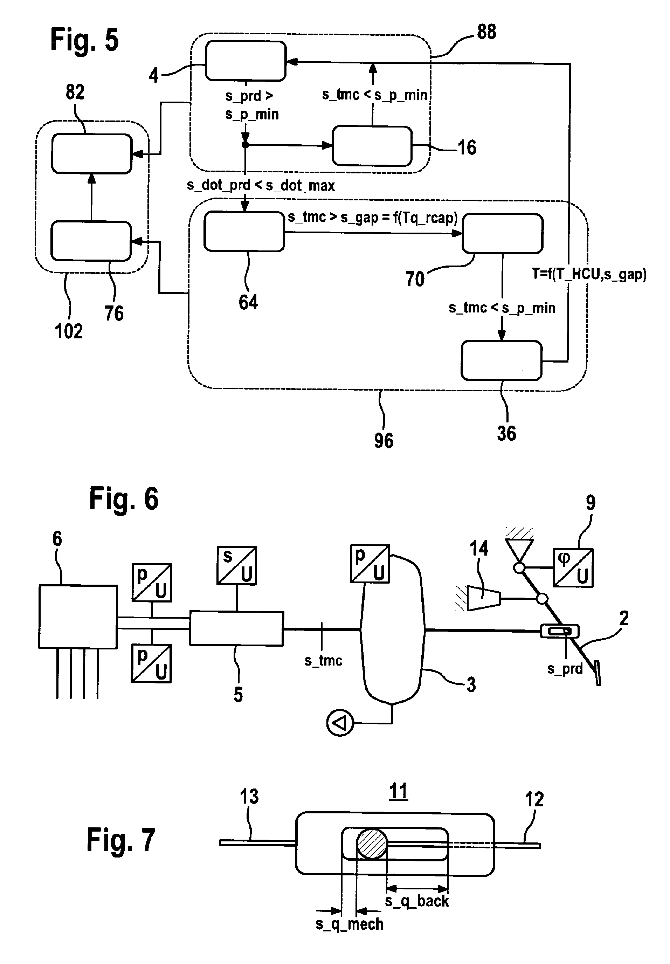

Nach der Bremsung muss das in den oder die Speicher verschobene Bremsflüssigkeitsvolumen wieder in den Hauptbremszylinder bzw. den Bremsflüssigkeitsbehälter zurückgeführt werden. Als Speicher wird oder werden im vorliegenden Ausführungsbeispiel Niederdruckspeicher (NDS) des Bremssystems verwendet, die beispielsweise auch für die ABS Regelung eingesetzt werden. Zur Zurückführung der Bremsflüssigkeit werden stromlos offene elektrische Umschaltventile (EUV) angesteuert, so dass eine Entleerung der NDS auf Grund der Befederung der NDS-Kolben stattfinden kann. Die EUV-Ansteuerung findet im Zustand Entleerung (Depletion) 36 statt, wobei die Ansteuerzeit der EUV als Funktion der Temperatur und des in den NDS gespeicherten Volumens gewählt wird. Dies ist in FIG. 1 (und auch FIG. 5) durch den Ausdruck T = f(T_HCU, s_gap) gekennzeichnet, wobei T die Ansteuerzeit der Ventile, T_HCU die gemessene Temperatur der Bremsflüssigkeit und s_gap das Bremsflüssigkeitsvolumen bezeichnen. Die Ansteuerzeit T wird beispielsweise bei kälteren Temperaturen länger gewählt als bei hohen Temperaturen, da die Viskosität der Bremsflüssigkeit bei niedrigen Temperaturen größer ist als bei höheren Temperaturen. Die Bremsflüssigkeit braucht somit aufgrund ihrer höheren Viskosität länger, bis sie aus dem Speicher zurück in den Bremskreis geflossen ist.

Alternativ zur NDS Entleerung durch die EUV-Ansteuerung ist auch eine Volumenförderung des in die NDS verschobenen Volumens in die Radbremsen möglich. Dies ist durch das Schließen von Trennventilen (TV) und die Ansteuerung einer Hydraulikpumpe zu realisieren (die EUV bleiben dabei geschlossen, so dass nur das in den NDS vorhandene Volumen verwendet wird.) Diese Option, durch den Zustand Kompensation (Compensation) 42 dargestellt, hat den Vorteil, dass das bei niedriger Fahrzeuggeschwindigkeit geringer werdende und im Stillstand ganz wegfallende Generatorbremsmoment durch einen aktiven Druckaufbau kompensiert werden kann. Ohne diese aktive Kompensation müsste der Fahrer das sinkende Generatorbremsmoment durch stärkere Betätigung des Bremspedals ausgleichen. Somit wäre dann nicht der konstante Zusammenhang zwischen Pedalweg und Bremsmoment bzw. Verzögerung gegeben.

An die Dimensionierung dieser Lücke, d. h., an die Dimensionierung des zu verschiebenden Bremsflüssigkeitsvolumens, werden verschiedene Anforderungen gestellt. Dies geschieht einerseits statisch, d. h. unabhängig von dem aktuellen Bremsvorgang, andererseits dynamisch, d. h. in Abhängigkeit von Parametern des aktuellen Bremsvorganges des Fahrzeuges.

Die statische Dimensionierung ist gewissermaßen eine Limitierung, d. h., sie kennzeichnet das maximal in den Speicher zu verschiebende Volumen. Die statische Dimensionierung muss einerseits sicherstellen, dass die verbleibende Kapazität des NDS bei vollständiger Ausnutzung des Speichervolumens ausreicht, um bei Vollbremsung und anschließendem schlagartigem Wechsel des Fahrbahnbelags auf Niedrigreibwert, d. h. bei schlagartigem Druckabbau durch die ABS-Funktion, ein Blockieren der Räder zu verhindern.

Andererseits muss die statische Dimensionierung so gewählt sein, dass die sich bei diesem Verfahrweg des Hauptbremszylinders einstellende Bremswirkung für den Fahrer konsistent ist, d. h., dass kein wahrnehmbarer Unterschied besteht zwischen der Wirkung des (dann maximalen) Generatorbremsmomentes Tq_rcap_max und dem Bremsmoment, das sich durch die konventionelle Betätigung der hydraulischen Bremse bei der entsprechenden Pedalauslenkung einstellt.

Dynamisch, d. h. zum Zeitpunkt der aktuellen Bremsung, erfolgt die Dimensionierung der elektrohydraulischen Lücke anhand des jeweils verfügbaren Generatorbremsmomentes Tq_rcap, sowie des gemäß einer Kennlinie aus der Auslenkung des Bremspedals (hier gleichbedeutend mit dem Verfahrweg des Hauptbremszylinders s_tmc) abgeleiteten Bremswunsches bzw. Sollbremsmoments Tq_drv.

Ist das verfügbare Generatorbremsmoment zu Beginn der Bremsung kleiner als ein Mindestwert Tq_min, wird ganz auf die Aktivierung der elektrohydraulischen Lücke verzichtet.

Übersteigt der Bremswunsch das zu Beginn der Bremsung verfügbare Generatorbremsmoment Tq_rcap_0, d. h. Tq_drv ≥ Tq_rcap_0, wird die Größe der elektrohydraulischen Lücke so bemessen, dass gerade die Generatorbremswirkung kompensiert wird, d. h., dass sich bei der aktuellen Auslenkung des Bremspedals dasselbe Gesamtbremsmoment (Summe aus Generatorbremsmoment und hydraulischem Bremsmoment) einstellt wie bei einem konventionellen, hydraulischen Bremssystem (ohne rekuperative Bremsfunktion durch einen Generator).

Liegt der Bremswunsch bzw. das Sollbremsmoment Tq_drv jedoch unter dem verfügbaren Generatorbremsmoment, d. h. Tq_drv < Tq_rcap_0, kann die Größe der elektrohydraulischen Lücke dynamisch so bemessen werden, dass der zu erwartende Anstieg des Generatorbremsmomentes im Verlauf der Bremsung berücksichtigt wird.

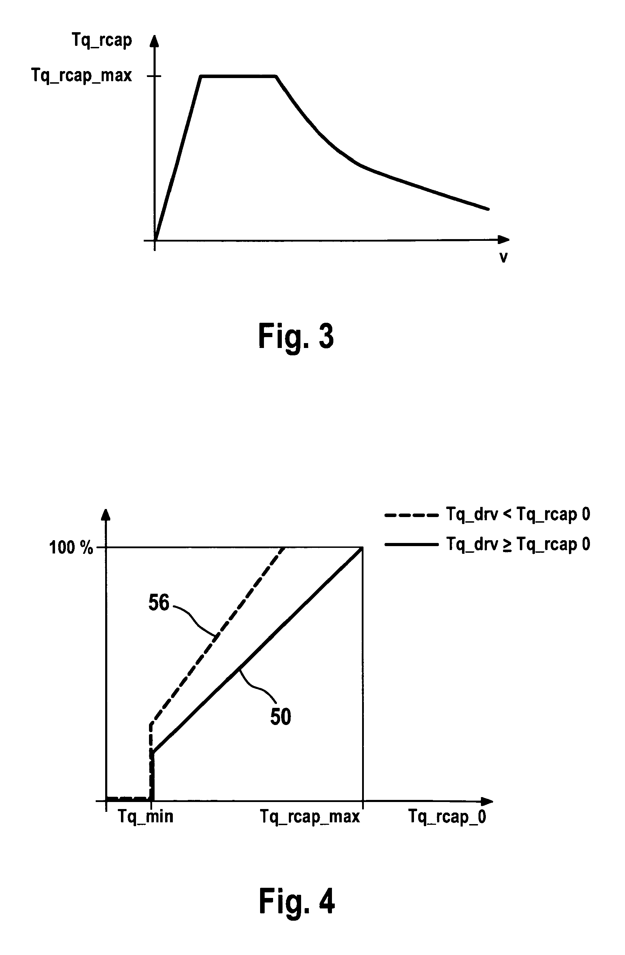

Zur Erläuterung wird hierzu auf die prinzipielle Abhängigkeit des Generatorbremsmomentes Tq_rcap von der Fahrzeuggeschwindigkeit v hingewiesen, die in FIG. 3 dargestellt ist. Auf der Abszisse ist die Geschwindigkeit v, auf der Ordinate das Generatorbremsmoment Tq_rcap aufgetragen. Auf Grund der Leistungsbegrenzung (Leistung P = const) ist das Generatorbremsmoment proportional zum Kehrwert der Geschwindigkeit v. Somit steigt das Generatorbremsmoment Tq_rcap mit fallender Geschwindigkeit v bis zu einem Maximalwert bzw. maximalen Generatorbremsmoment Tq_rcap_max. Bei niedriger Geschwindigkeit fällt das Moment Tq_rcap und erreicht Null im Fahrzeugstillstand, d. h. bei v = 0.

FIG. 4 zeigt die verschiedenen Fälle der dynamischen Dimensionierung der elektrohydraulischen Lücke. Auf der Abszisse ist das zu Beginn der Bremsung verfügbare Generatorbremsmoment Tq_rcap_0, auf der Ordinate das Verhältnis von dynamisch dimensionierter Lücke zu statisch dimensionierter Lücke aufgetragen.

Generell findet unterhalb eines Mindestwertes Tq_min des zu Beginn der Bremsung verfügbaren Generatorbremsmomentes Tq_rcap_0 keine Aktivierung der eGap-Funktion statt, d. h., der dynamische Wert der Lückengröße ist dann Null.

Übersteigt das angeforderte Gesamtbremsmoment das zu Beginn der Bremsung verfügbare Generatorbremsmoment Tq_rcap_0, wird die Lücke s_gap_dyn proportional zu Tq_rcap_0 dimensioniert und erreicht 100 % des statischen Wertes, wenn Tq_rcap_0 gleich dem bei der Auslegung berücksichtigten Maximalwert Tq_rcap_max ist (erste Kennlinie 50).

Sofern das angeforderte Gesamtbremsmoment unter dem zu Beginn der Bremsung verfügbaren Generatorbremsmoment Tq_rcap_0 liegt, wird die Lücke größer dimensioniert und erreicht den statischen Wert früher, d. h. bei kleineren Werten von Tq_rcap_0 (zweite Kennlinie 56). Damit wird der Tatsache Rechnung getragen, dass durch die abnehmende Fahrzeuggeschwindigkeit im Verlauf der Bremsung mit einem Anstieg des Generatorbremsmomentes zu rechnen ist.

Das Verfahren in einer weiteren bevorzugten Ausführungsform für ein Brake-by-Wire-Bremssystem ist in einem Zustandsdiagramm in FIG. 5 dargestellt.

Eine zugehörige Systemarchitektur nach dem Stand der Technik ist in FIG. 6 dargestellt. Hier ist die Erfassung des Verfahrweges s_tmc des Hauptbremszylinders und zusätzlich die des Pedalweges s_prd vorgesehen. Die Bremsgröße, durch die die elektrohydraulische Lücke aktiviert wird, d. h., die ausschlaggebend für die Leitung des Bremsflüssigkeitsvolumens in den Speicher ist, ist im vorliegenden Fall der Pedalweg s_prd. Der Pedalweg s_prd wird durch einen Winkelsensor 9 am Bremspedal erfasst, dessen Signal in den Verfahrweg der Pedalstange zum Hauptbremszylinder 5 umgerechnet wird. Der Booster 3 ist als aktiver Booster ausgestaltet, im vorliegenden Fall als Vakuumbremskraftverstärker mit aktiver Ansteuermöglichkeit. Der Verfahrweg s_tmc des Hauptbremszylinders 5 kann durch einen direkt am Hauptbremszylinder 5 angebrachten Wegsensor oder ggf. alternativ durch einen Membranwegsensor des aktiven Boosters erfolgen.

Die mechanische Entkopplung von Bremspedal und Hauptbremszylinder wird bei dem in FIG. 6 gezeigten Bremssystem 1 durch eine in FIG. 7 dargestellte Entkopplungsvorrichtung 11 durchgeführt. Sie weist eine Verbindung 12 zum Bremspedal 2 und eine Verbindung 13 zum Booster 3 auf. Die Entkopplungsvorrichtung 11 realisiert eine so genannte rückwärtige Lücke in der Anbindung des Bremspedals, so dass der Hauptbremszylinder 5 durch Ansteuerung des aktiven Boosters nach vorn (in FIG. 7 nach links) bewegt werden kann, ohne eine Rückwirkung auf das Bremspedal 2 auszuüben. Zusätzlich dazu kann eine Vorwärtslücke s_q_mech eingestellt werden. Diese ist je nach Auslegung der Bremsanlage und dem Ansprechverhalten des aktiven Bremskraftverstärkers zu wählen. So kann die Vorwärtslücke s_q_mech auch zu Null gesetzt werden. Durch eine Pedal-Simulator-Einheit 14 wird bei Betätigung des Bremspedals 2 eine Gegenkraft generiert. Auf diese Weise kann - in Verbindung mit der elektrohydraulischen Lücke - eine gleichbleibende Weg-Kraft Charakteristik unabhängig von der Aufteilung zwischen Generatorbremse und hydraulischer Bremse eingestellt werden.

Überschreitet der Pedalweg s_prd einen Pedalwegschwellwert s_p_min, findet, wie in FIG. 5 dargestellt, der Übergang aus dem Zustand Bereit (Ready) 4 in den Zustand Öffnen (Opening) 64 statt. Abhängig von der Wahl der mechanischen Lücke, erfolgt dabei noch keine Verschiebung des Hauptbremszylinders 5.

Als Zusatzbedingung für die Aktivierung der elektrohydraulischen Lücke kann auch hier die Antrittsgeschwindigkeit bzw. die Geschwindigkeit des Pedalwegs s_prd herangezogen und dadurch bei Panikbremsungen auf die elektrohydraulische Lücke verzichtet werden. In diesem Fall wird der Zustand Eingestellt (Suspended) 16 bis zum Lösen des Bremspedals angenommen.

Im Zustand Öffnen 64 werden die Auslassventile (AV) geöffnet (dies entspricht dem Zustand Offen 16 bei der Ausführungsform des Verfahrens gemäß FIG. 1). Zusätzlich wird der aktive Bremskraftverstärker derart angesteuert, dass sich der Verfahrweg des Hauptbremszylinders s_tmc auf die festgelegte Größe der elektrohydraulischen Lücke einstellt. Die Größe der elektrohydraulischen Lücke kann immer gleich anhand der maximalen Generatorbremswirkung oder adaptiv - wie in Verbindung mit dem Verfahren gemäß FIG. 1 erläutert - eingestellt werden.

Sobald sich die elektrohydraulische Lücke eingestellt hat, werden die AV geschlossen. Ausgehend von dieser Stellung des Hauptbremszylinders ist ein weiterer Druckaufbau durch Ansteuerung des aktiven Boosters 3 und somit das so genannte Blending zwischen Generatorbremse und hydraulischer Bremse möglich. Die Sollwertbildung (Fahrerwunscherfassung) erfolgt dabei kontinuierlich anhand des Pedalweges s_prd.

Nach Ende der Bremsung erfolgt die Entleerung des in die NDS verschobenen Bremsflüssigkeitsvolumens mittels der EUV-Ansteuerung wie im Zusammenhang mit dem Verfahren gemäß FIG. 1 erläutert.

Im Zusammenhang mit Brake-by-Wire-Bremssystemen ist das Verhalten im Fehlerfall, d. h. beim Auftreten eines Fehlers, der das System zwingt, in eine Rückfallebene zu schalten, von besonderer Bedeutung. Auf Grund der in der Regel größeren Dimensionierung der Lücke und der Gegenkraft durch die Vorrichtung zur Pedalkraftsimulation ist das Erreichen der Hilfsbremswirkung im Fehlerfall unter Umständen nicht ohne weitere Maßnahmen möglich. Im Folgenden werden die Optionen der eGap-Funktion beim Auftreten eines Systemfehlers, der das System zwingt, den By-Wire-Betrieb zu verlassen, erläutert.

Ein solcher Systemfehler kann beispielsweise der Ausfall der Sensorik zur Erfassung des Fahrerbremswunsches, der Ansteuerung des aktiven Bremskraftverstärkers, der elektrischen Energieversorgung oder des elektronischen Steuergerätes bzw. der elektronischen Steuer- und Regeleinheit (ECU) sein.

Tritt der Systemfehler auf, während die eGap-Funktion passiv ist (Zustand Passiv (Passive) 88) mit den Unterzuständen Bereit 4 und Eingestellt 16, wird die eGap-Funktion stillgelegt, d. h. es findet keine weitere Aktivierung mehr statt, das Verfahren gelangt zu Zustand Deaktiviert (Disabled) 82. Für die Auslegung der Rückfallebene (Hilfsbremswirkung) ist dann kein Verlustweg abgesehen von der evtl. vorhandenen mechanischen Lücke s_g_mech zu berücksichtigen.

Tritt der Systemfehler auf, während die eGap-Funktion aktiv ist - Zustand Aktiv(Active) 96 mit den Unterzuständen Öffnen 64, Geöffnet 70 und Entleerung 36 - sind zwei Fälle zu unterscheiden.

Falls eine Ansteuerung der Ventile und der Hydraulikpumpe noch weiterhin möglich ist, kann das durch die eGap-Funktion in die NDS verschobene Volumen aktiv in die Radbremse gefördert werden, dies geschieht im Zustand Elimination (Elimination) 76. Hierzu wird die Hydraulikpumpe bei geschlossenen Trennventilen angesteuert. Dabei wird die elektrohydraulische Lücke eliminiert und es werden somit dieselben Verhältnisse wie beim Ausfall im passiven Zustand hergestellt.

Falls die Ansteuerung der Ventile und/oder der Hydraulikpumpe nicht mehr möglich ist (z. B. wenn der Systemfehler die elektrische Energieversorgung oder die ECU betrifft) kann die elektrohydraulische Lücke nicht eliminiert werden. Für diesen Fall muss die Systemauslegung die Hilfsbremswirkung unter Berücksichtigung des evtl. fehlenden Hauptbremszylinderweges sicherstellen.

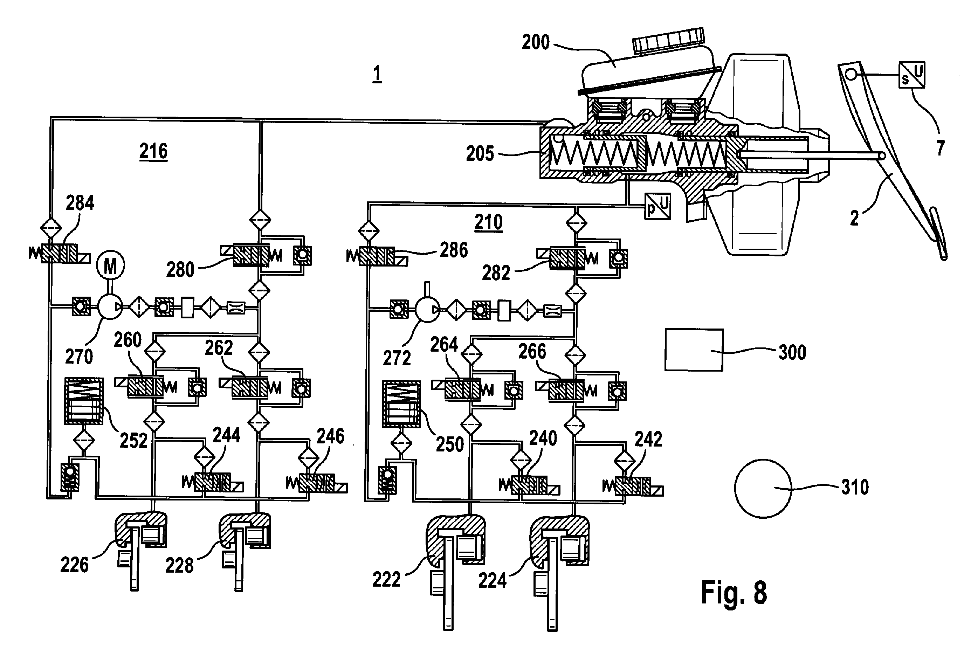

Ein Bremssystem 1, das als elektrohydraulisches Bremssystem ausgebildet ist, ist in einer bevorzugten Ausführungsform in FIG. 8 dargestellt. Über ein Bremspedal 2 werden in bekannter Weise Kolben in einem Tandemhauptbremszylinder (THZ) 205 verschoben, wodurch Bremsflüssigkeit in einen ersten Bremskreis 210 und einen zweiten Bremskreis 216 geschoben wird.

Mit dem THZ 205 ist ein Reservoir 200 für Bremsflüssigkeit verbunden.

Dem ersten Bremskreis 210 sind zwei Bremsen 222, 224, dem zweiten Bremskreis zwei Bremsen 226, 228 zugeordnet. Die beiden Bremsen 222, 224 sind den Vorderrädern, die beiden Bremsen 226, 228 den Hinterrädern eines Kraftfahrzeugs (nicht dargestellt) zugeordnet. Das Bremssystem 1 ist dementsprechend "schwarz-weiß" ausgelegt, das heißt, ein Bremskreis ist der Vorderachse, ein Bremskreis der Hinterachse zugeordnet. Alternativ dazu kann das Bremssystem 1 auch in "diagonaler" Weise realisiert sein, wobei jeder Bremskreis jeweils einer Hinterradbremse und einer Vorderradbremse zugeordnet ist.

Das Bremssystem 1 umfasst Auslassventile (AV) 240, 242, 244, 246, durch deren Öffnen jeweils Bremsflüssigkeit in Speicher 250, 252 verschoben werden kann (alle Ventile sind im stromlosen Zustand dargestellt). Jeder der beiden Speicher 250, 252 ist jeweils einem Bremskreis 210, 216 zugeordnet. Die Speicher 250, 252 sind jeweils als Niederdruckspeicher (NDS) ausgestaltet, die sich für bekannte ABS-Systeme eignen. Während bei einer ausschließlichen Nutzung der NDS im Rahmen eines ABS die NDS nur in seltenen Fällen - nämlich bei Bremsdruckregelungen durch das ABS-System - befüllt und/oder entleert werden, geschieht dies bei dem erfindungsgemäßen Bremssystem deutlich häufiger. Vorteilhafterweise werden daher NDS mit hoher Lebenszeit unter starker Belastung eingesetzt. In dem Bremssystem 1 ist eine ABS-Funktion realisiert. Dazu sind in bekannter Weise mehrere Ventile vorgesehen. Zur aktiven Förderung von Bremsflüssigkeit ist jeder Bremskreis 210, 216 jeweils mit einer Hydraulikpumpe 270, 272 ausgestattet.

Jeder der beiden Bremskreise 210, 216 ist jeweils mit einem Trennventil (TV) 280, 282 sowie einem elektrischen Umschaltventil (EUV) 284, 286 ausgestattet. Die Ansteuerung von Ventilen 240, 242, 244, 246, 260, 262, 264, 266, 280, 282, 284, 286 sowie von den Hydraulikpumpen 270, 272 erfolgt über eine elektronische Steuer- und Regeleinheit (ECU) 300.

Das Bremssystem 1 umfasst einen Generator 310, mit dem das Kraftfahrzeug regenerativ bzw. rekuperativ abgebremst werden kann. Die ECU 300 ist signaleingangsseitig mit dem Generator 310 verbunden und erhält von ihm Informationen über das momentan vom Generator 310 verfügbare Bremsmoment.

Die ECU 300 ist darüber hinaus signaleingangsseitig mit dem Wegsensor 7 verbunden. Sie ist zusätzlich oder alternativ dazu mit einem weiteren Wegsensor (nicht dargestellt) verbunden, der den Verfahrweg s_tmc des THZ misst.

Die ECU 300 bestimmt bei einem Bremsvorgang des Kraftfahrzeuges über die Stärke der Betätigung des Bremspedals 2 den Fahrerbremswunsch bzw. das vom Fahrer gewünschte Sollbremsmoment. Wenn die Änderungsgeschwindigkeit von s_tmc, s_dot_tmc, unter einem vorgegebenen s_dot_max liegt und wenn das verfügbare Generatorbremsmoment Tq_rcap über einem minimalen Generatorbremsmoment Tq_min liegt werden die stromlos offenen AV 240, 242, 244, 246 angesteuert, so dass das von dem THZ 205 verschobene Bremsflüssigkeitsvolumen nicht in die Bremsen 222, 224, 226, 228, sondern in die Speicher 250, 252 verschoben wird. Zur Reduzierung der Schaltspiele der AV 240, 242, 244, 246 kann beispielsweise bei einer Bremsung wechselweise nur jeweils ein AV (240 oder 242 und 244 oder 246) in jedem der beiden Bremskreise 210, 216 angesteuert werden. Zudem können auch die AV eines der Bremskreise 210, 216 geschlossen bleiben, so dass Bremsflüssigkeit nur in einen der beiden Speicher 250, 252 verschoben wird.

Wenn der Verfahrweg des THZ 205 eine Schwelle s_gap erreicht, werden die AV 240, 242, 244, 246 (oder eine Untermenge davon) geschlossen. Unter bestimmten Bedingungen werden diese Ventile schon vorher geschlossen. Dies ist beispielsweise dann der Fall, wenn eine Panikbremsung vorliegt, die sich durch eine schnelle Vorwärtsbewegung des Bremspedals 2 bemerkbar macht. Durch das Schließen der AV 240, 242, 244, 246 wird sichergestellt, dass Bremsflüssigkeit direkt und unmittelbar in die Bremsen 222, 224, 226, 228 geleitet und das Fahrzeug dadurch (möglichst maximal) verzögert wird. Die AV 240, 242, 244, 246 werden auch vorher geschlossen, wenn eine Rückwärtsbewegung des Bremspedals 2 vorliegt. Dadurch kann deren Rückwärtsdurchströmung vermieden werden.

Wenn der Bremsvorgang abgeschlossen ist, muss das in den oder die Speicher 250, 252 verschobene Bremsflüssigkeitsvolumen wieder in den THZ 205 bzw. das Reservoir 200 zurückgeschoben werden. Dazu werden die stromlos offen EUV 284, 286 angesteuert. Auf Grund der Befederung der als NDS ausgestalteten Speicher 250, 252 findet eine Entleerung der Speicher 250, 252 statt.

Alternativ zur oben beschriebenen Entleerung der Speicher 250, 252 kann das in den Speichern 250, 252 gespeicherte Bremsflüssigkeitsvolumen direkt in die Bremsen 222, 224, 226, 228 verschoben werden. Dazu werden die Trennventile 280, 282 geschlossen und die Hydraulikpumpen 270, 272 angesteuert. Dabei bleiben die EUV 284, 286 geschlossen. Dadurch wird nur das in den Speichern 250, 252 gespeicherte Volumen in die Bremsen 222, 224, 226, 228 verschoben. Auf diese Weise kann beispielsweise die Bremswirkung aufrechterhalten werden in Situationen, in denen das verfügbare Generatorbremsmoment Tq_rcap abnimmt. Die ECU 300 steuert dazu die Ventile 280, 282 und die Hydraulikpumpen 270, 272 derart an, dass die Bremswirkung durch das in die Bremsen 222, 224, 226, 228 verschobene Volumen gerade das abnehmende Generatorbremsmoment kompensiert. Die nachlassende Bremswirkung des Generators wird führt also nicht dazu, dass der Fahrer sich auf ein neues und/oder schwer vorhersehbares Bremsgefühl einstellen muss. Ohne diese Maßnahme müsste der Fahrer den Druck auf das Bremspedal 2 erhöhen.

Wie oben dargelegt, können zur Verschiebung von Bremsflüssigkeitsvolumen auch nur Untermengen der vorhandenen Ventile, Speicher und Hydraulikpumpen eingesetzt werden.

### Bezugszeichenliste

- 1: Bremssystem
- 2: Bremspedal
- 3: Booster
- 4: Zustand Bereit
- 5: Hauptbremszylinder
- 6: rekuperative Bremsanlage
- 7: Wegsensor
- 9: Winkelsensor
- 10: Zustand Offen
- 11: Entkopplungsvorrichtung
- 12, 13: Verbindung
- 14: Pedal-Simulator-Einheit
- 16: Zustand Eingestellt
- 22, 23: Pfeil
- 28: Zustand Geschlossen
- 36: Zustand Entleerung
- 42: Zustand Kompensation
- 50: erste Kennlinie
- 56: zweite Kennlinie
- 64: Zustand Öffnen
- 70: Zustand Geöffnet
- 76: Zustand Elimination
- 82: Zustand Deaktiviert
- 88: Zustand Passiv
- 96: Zustand Aktiv
- 102: Zustand Fehlfunktion
- 200: Reservoir
- 205: Tandemhauptbremszylinder
- 210: erster Bremskreis
- 216: zweiter Bremskreis
- 222, 224: Bremse
- 226, 228: Bremse
- 240, 242: Auslassventil
- 244, 246: Auslassventil
- 250, 252: Speicher
- 260, 262: Ventil
- 264, 266: Ventil
- 270, 272: Hydraulikpumpe
- 280, 282: Trennventil
- 284, 286: elektrisches Umschaltventil
- 300: elektronische Steuer- und Regeleinheit
- 310: Generator

- s_tmc: Verfahrweg des Hauptbremszylinders
- s_p_min: Mindestweg
- s_dot_tmc: Änderungsgeschwindigkeit des Verfahrweges
- s_dot_max: maximale Schwelle
- Tq_rcap: Generatorbremsmoment
- Tq_min: minimales Generatorbremsmoment
- s_gap: Schwelle
- Tq_rcap_max: maximales Generatorbremsmoment
- Tq_rcap_0: zur Beginn der Bremsung verfügbares Generatorbremsmoment
- Tq_drv: Sollbremsmoment
- v: Geschwindigkeit
- s_prd: Pedalweg
- s_p_min: Schwellwert des Pedalwegs
- s_q_back: rückwärtige Lücke
- s_q_mech: Vorwärtslücke

## Patentansprüche

1. Verfahren zum Betreiben eines Bremssystems (1) mit zwei Bremskreisen (210, 216), mit einer rekuperativen Bremse, insbesondere einem elektrischen Generator (310), einem Hauptbremszylinder (5) und einem Bremspedal (2), wobei bei einem Bremswunsch des Fahrers mit einem zugehörigen Sollbremsmoment bei Vorliegen einer ersten Bedingung wenigstens ein Auslassventil (240, 242, 244, 246) eines Bremskreises geöffnet wird und Bremsflüssigkeit mit einem zugeordneten Bremsflüssigkeitsvolumen in wenigstens einen Speicher (250, 252) des einen Bremskreises geleitet wird und anschließend das wenigstens eine Auslassventil (240, 242, 244, 246) bei Vorliegen einer zweiten Bedingung geschlossen wird, wobei die erste Bedingung vorliegt, wenn eine zum Bremswunsch korrespondierende Bremsgröße einen vorgegebenen Minimalwert nicht unterschreitet, und wobei die zweite Bedingung vorliegt, wenn das Bremsflüssigkeitsvolumen in den Speicher (250, 252) geflossen ist, **dadurch gekennzeichnet, dass** nach dem Bremsvorgang wenigstens ein elektrisches Umschaltventil (284, 286) des einen Bremskreises angesteuert wird und die Bremsflüssigkeit aus dem wenigstens einen Speicher (250, 252) über das wenigstens eine elektrische Umschaltventil (284, 286) zurück in den einen Bremskreis (210, 216) geleitet wird.

2. Verfahren nach Anspruch 1, wobei die erste Bedingung nur dann vorliegt, wenn auch die zeitliche Änderung der Bremsgröße einen vorgegebenen Maximalwert nicht überschreitet.

3. Verfahren nach Anspruch 1 oder 2, wobei die erste Bedingung nur dann vorliegt, wenn auch das durch den Generator (310) verfügbare Bremsmoment (Tq_rcap) größer als ein vorgegebenes minimales Generatorbremsmoment (Tq_min) ist.

4. Verfahren nach einem der Ansprüche 1 bis 3, wobei, wenn das Sollbremsmoment das zu Beginn der Bremsung verfügbare Generatorbremsmoment (Tq_rcap_0) übersteigt, die Betriebsbremsen (222, 224, 226, 228) betätigt werden und das Bremsflüssigkeitsvolumen derart bemessen wird, dass bei der aktuellen Auslenkung des Bremspedals (2) die Summe aus dem Generatorbremsmoment (Tq_rcap) und dem durch die Betriebsbremsen erzeugten Bremsmoment dem Bremsmoment eines konventionellen hydraulischen Bremssystems bei gleicher Pedalauslenkung entspricht.

5. Verfahren nach einem der Ansprüche 1 bis 3, wobei, wenn das Sollbremsmoment unter dem aktuell verfügbaren Generatorbremsmoment (Tq_rcap) liegt, zur Berechnung des Bremsflüssigkeitsvolumens der zu erwartende Anstieg des Generatorbremsmomentes (Tq_rcap) während des Verlaufs der Bremsung berücksichtigt wird.

6. Verfahren nach einem der Ansprüche 1 bis 5, wobei die Ansteuerzeit des wenigstens einen elektrischen Umschaltventils (284, 286) in Abhängigkeit von der Temperatur und des im Speicher gespeicherten Bremsflüssigkeitsvolumens gewählt wird.

7. Verfahren nach einem der Ansprüche 1 bis 6, wobei bei nachlassendem Generatorbremsmoment Trennventile (280, 282) geschlossen werden und wenigstens eine Hydraulikpumpe (270, 272) angesteuert wird und auf diese Weise die Bremsflüssigkeit aus dem Speicher (250, 252) in die Radbremsen (222, 224, 226, 228) geleitet wird.

8. Verfahren nach einem der Ansprüche 1 bis 7, wobei die Bremsgröße der Verfahrweg (s_tmc) des Hauptbremszylinders (5) oder der Pedalweg (s_prd) des Bremspedals (2) ist.

9. Verfahren nach einem der Ansprüche 1 bis 8, wobei das Verfahren zum Betreiben eines elektrohydraulischen Bremssystem (1) eingesetzt wird, und wobei die Betätigung der Bremsen (222, 224, 226, 228) hydraulisch durch Betätigung des Bremspedals (2) und/oder durch die Ansteuerung wenigstens einer Hydraulikpumpe (270, 272) erfolgt.

10. Verfahren nach einem der Ansprüche 1 bis 8, wobei das Verfahren zum Betreiben eines Brake-by-Wire-Bremssystems eingesetzt wird, und wobei die Bremsen aktiv durch einen Bremskraftverstärker betätigt werden.

11. Verfahren nach einem der Ansprüche 1 bis 8, wobei das Verfahren zum Betreiben eines kombinierten Bremssystems mit zwei einer ersten Fahrzeugachse zugeordneten elektromechanisch betätigbaren Bremsen und zwei einer zweiten Fahrzeugachse zugeordneten hydraulischen Bremsen eingesetzt wird.

12. Elektrohydraulisches Bremssystem mit zwei Bremskreisen (210, 216) und zugeordneten Bremsen, mit einer rekuperativen Bremse, insbesondere einem elektrischen Generator (310), einem Hauptbremszylinder (5) und einem Bremspedal, einer hydraulischen Steuer- und Regeleinheit, mit wenigstens einem Speicher und Auslassventilen, durch deren Öffnen Bremsflüssigkeit in den wenigstens einen Speicher geleitet werden kann, wobei eine elektronische Steuer- und Regeleinheit (300) vorgesehen ist, in der ein Verfahren nach Anspruch 9 ausführt wird und wobei der wenigstens eine Speicher (250, 252) als Niederdruckspeicher ausgebildet ist.

13. Brake-by-Wire-Bremssystem mit zwei Bremskreisen (210, 216) und zugeordneten Bremsen, mit einer rekuperativen Bremse, insbesondere einem elektrischen Generator (310), einem Hauptbremszylinder (5) und einem Bremspedal, mit wenigstens einem Speicher und Auslassventilen, durch deren Öffnen Bremsflüssigkeit in den Speicher geleitet werden kann, wobei eine elektronische Steuer- und Regeleinheit (300) vorgesehen ist, in der ein Verfahren nach Anspruch 10 ausgeführt wird und wobei der wenigstens eine Speicher (250, 252) als Niederdruckspeicher ausgebildet ist.

14. Kombiniertes Bremssystem mit zwei Bremskreisen, wobei der erste Bremskreis zwei elektromechanisch betätigbare Bremsen umfasst und der zweite Bremskreis zwei elektrohydraulisch betätigbare Bremsen umfasst und mit wenigstens einem Speicher, wobei eine elektronische Steuer- und Regeleinheit (300) vorgesehen ist, in der ein Verfahren nach Anspruch 11 ausgeführt wird und bei dem der wenigstens eine Speicher (250, 252) als Niederdruckspeicher ausgebildet ist.

15. Kraftfahrzeug mit einem Bremssystem nach einem der Ansprüche 12 bis 14.

## Claims

1. Method for the operation of a brake system (1) having two brake circuits (210, 216), with a recuperative brake, in particular an electrical generator (310), a master brake cylinder (5) and a brake pedal (2), wherein at least one outlet valve (240, 242, 244, 246) of a brake circuit is opened and brake fluid is conducted into at least one reservoir (250, 252) of the one brake circuit with an associated volume of brake fluid in the event of a driver's braking demand with an associated desired braking torque and if a first condition is met, and then the at least one outlet valve (240, 242, 244, 246) is closed if a second condition is met, wherein the first condition is met if a braking variable corresponding to the braking demand is not less than a specified minimum value, and wherein the second condition is met if the volume of brake fluid has flowed into the reservoirs (250, 252), **characterized in that**, after the braking operation, at least one electric switchover valve (284, 286) of the one brake circuit is actuated and the brake fluid is conducted out of the at least one reservoir (250, 252) via the at least one electric switchover valve (284, 286) back into the one brake circuit (210, 216).

2. Method according to Claim 1, wherein the first condition is only met if also the change against time of the braking variable does not exceed a specified maximum value.

3. Method according to Claim 1 or 2, wherein the first condition is only met if also the braking torque (Tq_rcap) available from the generator (310) is greater than a specified minimum generator braking torque (Tq_min).

4. Method according to any one of Claims 1 to 3, wherein, if the desired braking torque exceeds the available generator braking torque (Tq_rcap_0) at the start of braking, the operating brakes (222, 224, 226, 228) are operated and the volume of brake fluid is dimensioned in such a way that for the present displacement of the brake pedal (2) the sum of the generator braking torque (Tq_rcap) and the braking torque generated by the operating brakes corresponds to the braking torque of a conventional hydraulic brake system for the same pedal displacement.

5. Method according to any one of Claims 1 to 3, wherein, if the desired braking torque is less than the currently available generator braking torque (Tq_rcap), the increase in the generator braking torque (Tq_rcap) to be anticipated during the course of the braking is taken into account during the calculation of the volume of brake fluid.

6. Method according to any one of Claims 1 to 5, wherein the operating time of the at least one electrical diverter valve (284, 286) is selected depending on the temperature and the volume of brake fluid stored in the reservoir.

7. Method according to any one of Claims 1 to 6, wherein for decreasing generator braking torque isolating valves (280, 282) are closed and at least one hydraulic pump (270, 272) is operated and in this way the brake fluid is conducted from the reservoir (250, 252) into the wheel brakes (222, 224, 226, 228).

8. Method according to any one of Claims 1 to 7, wherein the braking variable is the travel (s_tmc) of the master brake cylinder (5) or the pedal displacement (s_prd) of the brake pedal (2).

9. Method according to any one of Claims 1 to 8, wherein the method is used for the operation of an electrohydraulic brake system (1), and wherein the operation of the brakes (222, 224, 226, 228) takes place hydraulically by operation of the brake pedal (2) and/or by operating at least one hydraulic pump (270, 272).

10. Method according to any one of Claims 1 to 8, wherein the method is used for the operation of a brake-by-wire brake system and wherein the brakes are actively operated by means of a braking force booster.

11. Method according to any one of Claims 1 to 8, wherein the method is used for the operation of a combined brake system with two electromechanically operated brakes associated with a first vehicle axle and two hydraulic brakes associated with a second vehicle axle.

12. Electrohydraulic brake system having two brake circuits (210, 216) and associated brakes, with a recuperative brake, in particular an electrical generator (310), a master brake cylinder (5) and a brake pedal, a hydraulic control and regulating unit, with at least one reservoir and outlet valves, whose opening allows brake fluid to be conducted into the at least one reservoir, wherein an electronic control and regulating unit (300) is provided in which a method according to Claim 9 is implemented and wherein the at least one reservoir (250, 252) is in the form of a low pressure reservoir.

13. Brake-by-wire brake system having two brake circuits (210, 216) and associated brakes, with a recuperative brake, in particular an electrical generator (310), a master brake cylinder (5) and a brake pedal, with at least one reservoir and outlet valves, whose opening allows brake fluid to be conducted into the reservoir, wherein an electronic control and regulating unit (300) is provided in which a method according to Claim 10 is implemented and wherein the at least one reservoir (250, 252) is in the form of a low pressure reservoir.

14. Combined brake system having two brake circuits, wherein the first brake circuit comprises two electromechanically operated brakes and the second brake circuit comprises two electrohydraulically operated brakes, and with at least one reservoir, wherein an electronic control and regulating unit (300) is provided in which a method according to Claim 11 is implemented, and for which the at least one reservoir (250, 252) is in the form of a low pressure reservoir.

15. Motor vehicle having a brake system according to any one of Claims 12 to 14.

## Revendications

1. Procédé pour faire fonctionner un système de freinage (1) comprenant deux circuits de freinage (210, 216), un frein récupératif, en particulier un générateur électrique (310), un maître-cylindre de frein (5) et une pédale de frein (2), au moins une valve d'échappement (240, 242, 244, 246) d'un circuit de freinage étant ouverte en présence d'une première condition en cas d'un souhait de frein du conducteur avec un couple de freinage de consigne associé, et un liquide de frein étant dirigé vers au moins un réservoir (250, 252) de l'un des circuits de freinage avec un volume de liquide de frein associé et ensuite en présence d'une deuxième condition l'au moins une valve d'échappement (240, 242, 244, 246) étant fermée, la première condition étant présente si l'amplitude de freinage correspondant au souhait de frein n'est pas inférieure à une valeur minimale imposée, et la deuxième condition étant présente si le volume de liquide de frein est coulé dans le réservoir (250, 252), **caractérisé en ce qu'**après l'opération de freinage, au moins une valve d'inversion (284, 286) de l'un des circuits de freinage est pilotée et le liquide de frein de l'au moins un réservoir (250, 252) est redirigé dans l'un des circuits de freinage (210, 216) par l'au moins une valve d'inversion électrique (284, 286) .

2. Procédé selon la revendication 1, la première condition étant présente uniquement si aussi la modification temporelle de l'amplitude de frein ne dépasse pas une valeur maximale imposée.

3. Procédé selon les revendications 1 ou 2, la première condition étant présente uniquement si aussi le couple de freinage étant disponible par le générateur (310) (Tq_rcap) est plus élevé qu'un couple de freinage de générateur minimal imposé (Tq_min) .

4. Procédé selon l'une quelconque des revendications 1 à 3, les freins de service (222, 224, 226, 228) étant actionnés si le couple de freinage de consigne dépasse le couple de freinage de générateur étant étant disponible au début du freinage, et le volume du liquide de frein étant calculé de sorte que lors de la déviation actuelle de la pédale de frein (2), le total du couple de freinage de générateur (Tq_rcap) et du couple de freinage produit par les freins de service correspond au couple de freinage d'un système de freinage hydraulique conventionnel à la même déviation de la pédale.

5. Procédé selon l'une quelconque des revendications 1 à 3, l'augmentation prévisible du couple de freinage de générateur (Tq_rcap) étant considérée pour le calcul du volume du liquide de frein pendant le cours du freinage si le couple de freinage de consigne est inférieur au couple de freinage de générateur (Tq_rcap) actuellement disponible.

6. Procédé selon l'une quelconque des revendications 1 à 5, la durée de pilotage de l'au moins une valve d'inversion (284, 286) étant choisie en fonction de la température et du volume de liquide de frein accumulé dans le réservoir.

7. Procédé selon l'une quelconque des revendications 1 à 6, des valves d'arrêt (280, 282) étant fermées lors d'un couple de freinage de générateur affaiblissant, et au moins une pompe hydraulique (270, 272) étant pilotée et le liquide de frein étant dirigé de cette manière du réservoir (250, 252) vers les freins de roue (222, 224, 226, 228).

8. Procédé selon l'une quelconque des revendications 1 à 7, l'amplitude de frein étant le déplacement (s_tmc) du maître-cylindre de frein (5) ou le mouvement de pédale (s_prd) de la pédale de frein (2) .

9. Procédé selon l'une quelconque des revendications 1 à 8, le procédé étant utilisé pour faire fonctionner un système de freinage électrohydraulique (1), et l'activation des freins (222, 224, 226, 228) se faisant hydrauliquement par l'activation de la pédale de frein (2) et/ou par le pilotage d'au moins une pompe hydraulique (270, 272).

10. Procédé selon l'une quelconque des revendications 1 à 8, le procédé étant utilisé pour faire fonctionner un système de freinage « brake by wire », et les freins étant activés activement par un servofrein.

11. Procédé selon l'une quelconque des revendications 1 à 8, le procédé étant utilisé pour faire fonctionner un système de freinage combiné avec deux freins pouvant être actionnés électromécaniquement étant associé à un premier essieu du véhicule, et avec deux freins hydrauliques étant associés à un deuxième essieu du véhicule.

12. Système de freinage électrohydraulique comprenant deux circuits de freinage (210, 216) et des freins associés, un frein récupératif, en particulier un générateur électrique (310), un maître-cylindre de frein (5) et une pédale de frein, une unité de commande et de réglage hydraulique, au moins un réservoir et des valves d'échappement par l'ouverture desquelles un liquide de frein peut être dirigé vers l'au moins un réservoir, une unité de commande et de réglage électronique (300) étant envisagée dans laquelle un procédé selon la revendication 9 est exécuté, et l'au moins un réservoir (250, 252) étant formé comme réservoir basse pression.

13. Système de freinage « brake by wire » comprenant deux circuits de freinage (210, 216) et des freins associés, un frein récupératif, en particulier un générateur électrique (310), un maître-cylindre de frein (5) et une pédale de frein, au moins un réservoir et des valves d'échappement par l'ouverture desquelles un liquide de frein peut être dirigé vers le réservoir, une unité de commande et de réglage électronique (300) étant envisagée dans laquelle un procédé selon la revendication 10 est exécuté, et l'au moins un réservoir (250, 252) étant formé comme réservoir basse pression.

14. Système de freinage combiné comprenant deux circuits de freinage, le premier circuit de freinage comprenant deux freins pouvant être actionnés électroméchaniquement et le deuxième circuit de freinage comprenant deux freins pouvant être actionnés électrohydrauliquement, et comprenant au moins un réservoir, une unité de commande et de réglage électronique (300) étant envisagée dans laquelle un procédé selon la revendication 11 est exercé, et l'au moins un réservoir (250, 252) étant formé comme réservoir basse pression.

15. Véhicule à moteur comprenant un système de freinage selon l'une quelconque des revendications 12 à 14.
